# EUROPÄISCHE PATENTANMELDUNG

(11) **EP 1 172 253 A2**
(43) Veröffentlichungstag der Anmeldung: **16.01.2002**
(21) Anmeldenummer: 01116156.9
(22) Anmeldetag: 04.07.2001
(51) Int. Cl.: B60Q 1/26

(54) **Leuchte für Fahrzeuge**

(30) Priorität: 15.07.2000 DE 10034452
(71) Anmelder: Hella KG Hueck & Co., 59552 Lippstadt (DE)
(72) Erfinder: Mügge, Martin, 59590 Geseke (DE); Zasada, Hans-Udo, Dr., 59329 Wadersloh (DE)

(57) **Zusammenfassung**

Leuchte für Fahrzeuge, insbesondere Signalleuchte für Kraftfahrzeuge, mit einer Mehrzahl von etwa parallel nebeneinander angeordneten langgestreckten Lichtleitelementen mit einer an einem Ende angeordneten Lichteinkoppelfläche, einer reflektierenden Fläche und einer der reflektierenden Fläche gegenüberliegenden Lichtaustrittsfläche über die über die Lichteinkoppelfläche eingekoppeltes und von der reflektierenden Fläche reflektiertes Licht etwa quer zu einer Längsachse in einer Hauptabstrahlrichtung abgestrahlt wird, wobei die Lichtleitelemente räumlich versetzt so angeordnet werden, dass etwa quer zur Längsachse und etwa quer zur Hauptabstrahlrichtung die Lichtleitelemente untereinander einen so geringen Abstand aufweisen, dass sie in Hauptabstrahlrichtung als Fläche wirken.

## Beschreibung

Die Erfindung betrifft eine Leuchte für Fahrzeuge, insbesondere Signalleuchte für Kraftfahrzeuge, mit einer Mehrzahl von etwa parallel nebeneinander angeordneten langgestreckten Lichtleitelementen mit mindestens einer an einem Ende angeordneten Lichteinkoppelfläche, einer reflektierenden Fläche und einer der reflektierenden Fläche gegenüberliegenden Lichtaustrittsfläche, über die über die Lichteinkoppelfläche eingekoppeltes und von der reflektierenden Fläche reflektiertes Licht etwa quer zu einer Längsachse in einer Hauptabstrahlrichtung abgestrahlt wird.

Aus der DE 298 07 774 U1 ist eine Leuchte für Fahrzeuge, insbesondere eine Heckleuchte für Fahrzeuge bekannt, die vier nebeneinander verlaufende langgestreckte Lichtleitelemente aufweist. Die Lichtleitelemente sind auf einem Grundteil eines Gehäuses angeordnet. An ihrer dem Grundteil zugewandten Unterseite weisen die Lichtleitelemente eine reflektierende Fläche auf. Eine der einander gegenüberliegenden Stirnseiten ist als eine Lichteinkoppelfläche ausgebildet, über die Licht einer auf einer Leiterplatte angeordneten benachbarten Leuchtdiode eingekoppelt, von der reflektierenden Fläche reflektiert und über eine der reflektierenden Fläche gegenüberliegenden Lichtaustrittsfläche quer zur Längsrichtung des Lichtleitelementes und etwa senkrecht zur Lichtaustrittsfläche verlaufenden Hauptabstrahlrichtung ausgekoppelt bzw. abgestrahlt wird. Der Lichtaustrittsfläche vorgelagert ist eine lichtdurchlässige, die Heckleuchte abdeckende Lichtscheibe angeordnet.

Nachteilig bei der bekannten Leuchte ist, dass zwischen den einzelnen Lichtleitelementen deutliche Spalte zu erkennen sind. Damit kann nicht der Eindruck einer leuchtenden Fläche erzeugt werden.

Weiterhin ist aus der DE 41 29 094 A1 eine Signalleuchte für Kraftfahrzeuge bekannt, bei der eine Mehrzahl von langgestreckten Lichtleitelementen in einer Ebene flächig angeordnet sind. Für Zwecke einer einfachen und kostengünstigen Herstellung sind dabei die Lichtleitelemente einstückig ausgebildet, d.h. benachbarte Lichtleitelemente gehen seitlich ineinander über.

Nachteilig dabei ist, dass der Bauraum für lichtstromstärkere Funktionen, wie z. B. ein Bremslicht, sehr groß werden müsste, um die erforderliche Anzahl von Lichtleitstäben aufzunehmen. Zwar ist es auch möglich Licht über eine zweite Lichteinkoppelfläche am gegenüberliegenden Ende einzukoppeln, führt aber dann unter Umständen zu Problemen bei der Herstellung der Stäbe (Spritzparameter, Zykluszeiten, Einfallstellen etc.). Die bekannte flächige Anordnung von Lichtleitelementen kann den Anforderungen an Bauraumgeometrie und Styling für moderne Fahrzeuge, insbesondere für lichstromstarke Funktionen, nicht gerecht werden.

Aufgabe der vorliegenden Erfindung ist es daher, eine Mehrzahl von Lichtleitelementen so anzuordnen, dass sie zum einen mit einem begrenzten Bauraum auskommen und zum anderen zumindest in Hauptabstrahlrichtung den Eindruck einer zusammenhängenden "leuchtenden" Fläche erzeugen und der Bauraumgeometrie und dem Styling für moderne Fahrzeuge gerecht werden können.

Diese Aufgabe wird erfindungsgemäß in Verbindung mit dem Oberbegriff des Anspruches 1 dadurch gelöst, dass die Lichtleitelemente räumlich versetzt so angeordnet werden, dass etwa quer zur Längsachse und etwa quer zur Hauptabstrahlrichtung die Lichtleitelemente untereinander einen so geringen Abstand aufweisen, dass sie in Hauptabstrahlrichtung als Fläche wirken.

Dadurch, dass die Lichtleitelemente räumlich versetzt und nicht in einer Ebene angeordnet werden, wird vorteilhaft erreicht, dass die einzelnen Lichtleitelemente sich sogar überlappen können, so dass zum einen bei kompakter räumlicher Anordnung ein entsprechend kleiner Bauraum benötigt wird und dass zum anderen eine hohe Lichtleistung erreicht wird.

Gemäß einer bevorzugten Ausführungsform der Erfindung sind die Lichtleitelemente mindestens in Teilbereichen zweireihig hintereinander angeordnet, wobei die Lichtleitelemente einer ersten Reihe zueinander einen eine Lücke bildenden Abstand aufweisen und die Lücke jeweils von einem Lichtleitelement einer zweiten Reihe abgedeckt wird.

Bei einer zweireihigen Anordnung entsteht auch aus unterschiedlichen Blickrichtungen jeweils das Bild einer leuchtenden Fläche. Dabei sind Funktionen mit einem hohen Lichtstrombedarf realisierbar, da durch die zweireihige Anordnung trotz kompakter Bauweise eine große Zahl von Lichtleitelementen verwendet werden kann. Schmale Funktionsfelder können so mit einer grösseren Anzahl von Lichtleitelementen ausgeführt werden. Durch größere Leiterplatten und größere Abstände der den Lichteinkoppelflächen vorgelagerten Lichtquellen, beispielsweise Leuchtdioden, ist eine thermische Entkopplung der Leuchtquellen untereinander möglich. Zugleich ist es möglich, die Lichtleitelemente der hinteren zweiten Reihe mit einer geringeren optischen Streuung auszubilden als die Lichtleitelemente der vorderen ersten Reihe. Weiterhin ist es vorteilhaft möglich, die beiden hintereinander liegenden Reihen unterschiedlich zu beschalten. Beispielsweise können die Lichtleitelemente der vorderen Reihe als Schlusslicht geschaltet werden und beide Reihen gemeinsam als Bremslicht. Auch ist es möglich, die Stabgeometrie bzw. Querschnitte der Lichtleitelemente unterschiedlich auszubilden. Beispielsweise ist es möglich, die Lichtleitelemente der ersten Reihe mit einem grösseren Durchmesser, beispielsweise 10 mm, und die hintere zweite Reihe von Lichtleitelementen mit einem kleineren Durchmesser, beispielsweise 6 mm, zu versehen, so dass die einzelnen Lichtleitelemente eng zusammengesetzt werden können.

Nach einer weiteren bevorzugten Ausführungsform der Erfindung sind die Lichtleitelemente längs einer vorgegebenen Kontur angeordnet.

Durch die räumliche Anordnung in einer vorgegebenen Kontur lässt sich die erfindungsgemäße Leuchte an moderne Fahrzeugkonturen anpassen. Auch bei einer konturfolgenden Anordnung der einzelnen Lichtleitelemente ist eine zweireihige Anordnung zumindest in Teilbereichen möglich.

Auch ist es möglich, die Lichtleitelemente längs einer mäanderförmigen Kontur oder längs einer schräg verlaufenden Kontur anzuordnen.

Gemäß einer weiteren bevorzugten Ausführungsform der Erfindung weisen die Lichtleitstäbe zur Erzeugung einer Tiefenwirkung eine konvexe Anordnung auf. Eine Tiefenwirkung lässt sich aber auch beispielsweise durch eine konkave Anordnung erreichen.

Nach einer weiteren bevorzugten Ausführungsform der Erfindung sind benachbarte Lichtleitelemente miteinander verbunden bzw. durchdringen einander. Die Verbindung kann aus werkzeugtechnischen Gründen als Verbindungssteg ausgeführt werden.

Gemäß einer weiteren bevorzugten Ausführungsform der Erfindung sind die Lichtleitstäbe an den Enden in einer Leuchtmittelaufnahme zusammengefasst. Dies bewirkt eine optimale Ausrichtung der einzelnen Lichtquelle auf das zugehörige Lichtleitelement und führt des Weiteren zu einem einzigen Bauteil.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: Eine Seitenansicht einer Leuchte im Schnitt mit zweireihiger Anordnung der Lichtleitelemente,
- Figur 2:: eine Seitenansicht einer Leuchte im Schnitt mit einer konturfolgenden Anordnung von Lichtleitelementen,
- Figur 3:: eine Seitenansicht einer Leuchte im Schnitt mit einer konturfolgenden Anordnung von Lichtleitelementen in teilweise doppelreihiger Anordnung,
- Figur 4:: eine Seitenansicht einer Leuchte im Schnitt mit zweireihig angeordneten Lichtleitelementen unterschiedlicher Größe die untereinander verbunden sind,
- Figur 5:: eine Seitenansicht einer Leuchte im Schnitt mit einer mäanderförmigen Anordnung der Lichtleitelemente,
- Figur 6:: eine Seitenansicht einer Leuchte im Schnitt mit einem schrägen Konturverlauf,
- Figur 7:: eine Seitenansicht einer Leuchte im Schnitt mit einem schräg zurückfallenden Konturverlauf,
- Figur 8:: eine Seitenansicht einer Leuchte im Schnitt mit konkaver Anordnung der Lichtleitelemente,
- Figur 9:: eine Seitenansicht einer Leuchte im Schnitt mit konvex angeordneten Lichtleitelementen und
- Figur 10:: eine Seitenansicht eines Lichtleitelementes mit vorgelagerter Lichtquelle.

Eine Leuchte 1 besteht im Wesentlichen aus einem Gehäuse 2, Lichtleitelementen 3 und einer transparenten Abdeckscheibe 4.

In dem Gehäuse 2 sind die Lichtleitelemente 3 im Wesentlichen parallel nebeneinander räumlich angeordnet. Das Gehäuse 2 wird zu einer Hauptabstrahlrichtung 5 hin von der transparenten Abdeckscheibe 4 abgedeckt.

Das Lichtleitelement 3 weist an einem ersten Ende 6 quer zu seiner Längsachse 7 eine Lichteinkoppelfläche 8 auf. An seiner dem Gehäuse 2 zugewandten Rückseite 9 weist das Lichtleitelement 3 eine reflektierende Fläche 10 mit quer zur Längsachse 7 angeordneten Prismen 11 auf. Der reflektierenden Fläche gegenüberliegend ist eine Lichtaustrittsfläche 12 angeordnet. Der Lichteinkoppelfläche 8 ist eine Lichtquelle 13, beispielsweise eine Leuchtdiode (LED) vorgelagert.

Von der Lichtquelle 13 abgestrahltes Licht wird über die Lichteinkoppelfläche 8 des Lichtleitelementes 3 eingekoppelt, von der reflektierenden Fläche 10 reflektiert und über die Lichtaustrittsfläche in der quer zur Längsachse 7 angeordneten Hauptabstrahlrichtung 5 abgestrahlt.

Die Lichtleitelemente 3 sind räumlich versetzt so angeordnet, dass die Lichtleitelemente 3 in vertikaler Richtung quer zur Hauptabstrahlrichtung 5 untereinander einen so geringen seitlichen Abstand 14 aufweisen, dass sie mindestens in der Hauptabstrahlrichtung 5 als eine einheitliche leuchtende Fläche wirken.

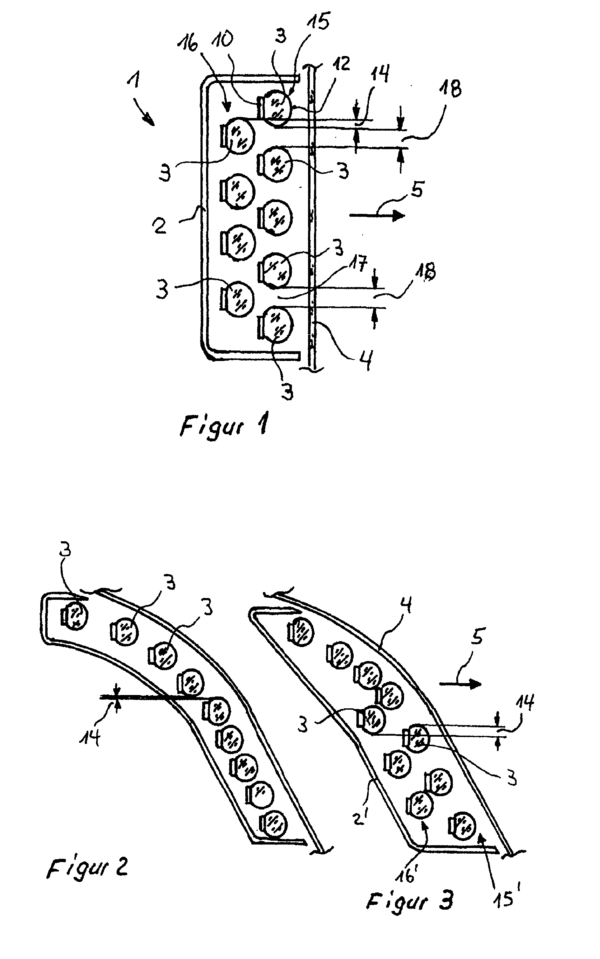

Entsprechend der Figur 1 sind die Lichtleitelemente 3 zweireihig hintereinander angeordnet. Der transparenten Abdeckscheibe 4 ist eine erste Reihe 15 von Lichtleitelementen 3 und dem Gehäuse 2 ist eine zweite Reihe 16 von Lichtleitelementen 3 benachbart. Die Lichtleitelemente 3 der ersten Reihe 15 weisen einen eine Lücke 17 bildenden Abstand 18 zueinander auf. Die Lücken 17 werden jeweils von einem Lichtleitelement 3 der zweiten Reihe 16 in Richtung Hauptabstrahlrichtung 5 abgedeckt. Die quer zur Hauptabstrahlrichtung 5 liegenden Abstände 14 jeweils zwischen Lichtleitelement 3 der ersten Reihe 15 und benachbartem Lichtleitelement 3 der zweiten Reihe 16 sind jeweils so ausgebildet, dass sich die Lichtleitelemente 3 der ersten Reihe 15 und der zweiten Reihe 16 überlappen.

Entsprechend der Figur 4 können die Lichtleitelemente 3 einer ersten Reihe 15" einen anderen Durchmesser bzw. Querschnitt - beispielsweise 10 mm - aufweisen als die Lichtleitelemente 3 einer zweiten Reihe 16", die beispielsweise einen Durchmesser bzw. Querschnitt von 6 mm aufweisen.

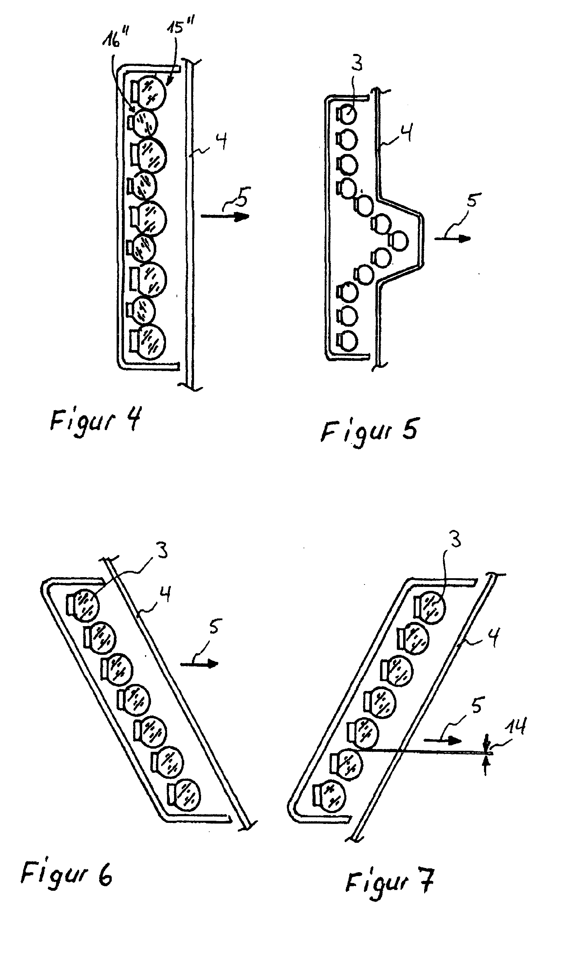

In dem Beispiel der Figur 2 sind eine Mehrzahl von Lichtleitelementen 3 räumlich versetzt, einer vorgegebenen Lichtscheibenkontur folgend, angeordnet. Es ist aber auch möglich, die Lichtleitelemente 3 entsprechend Figur 3 je nach zur Verfügung stehendem Bauraum zweireihig anzuordnen. Hierzu wird einer ersten Reihe 15' in einem Teilbereich eine zweite Reihe 16' zum Gehäuse 2' hin vorgelagert. Entsprechend den Figuren 5 bis 7 ist es auch möglich, die Lichtleitelemente mäanderförmig oder schräg anzuordnen. Dies ist sowohl einreihig als auch doppelreihig möglich.

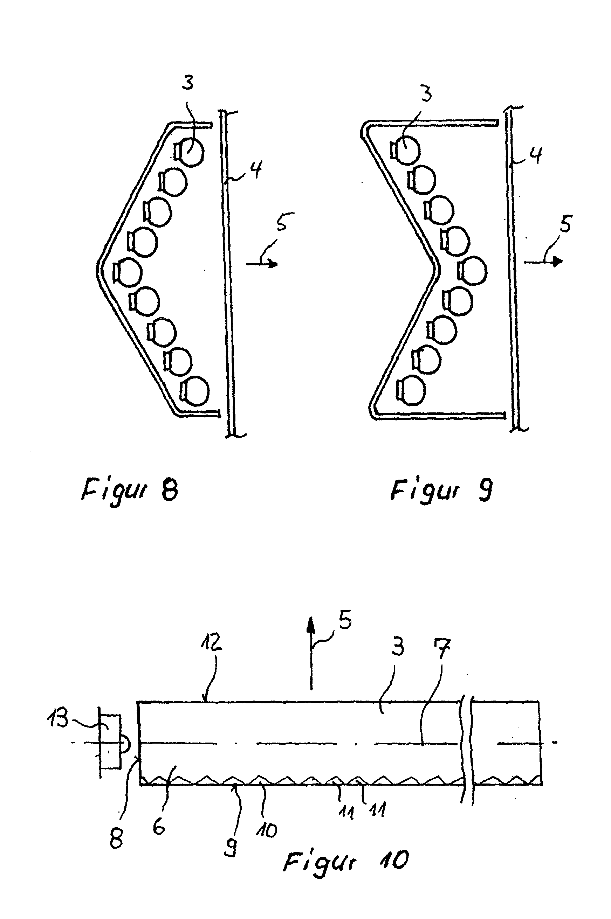

Entsprechend den Figuren 8 und 9 ist es auch möglich, insbesondere zur Erzeugung einer Tiefenwirkung, die Lichtleitelemente 3 konkav oder konvex und zwar einreihig oder zweireihig anzuordnen. Die sowohl einreihigen, als auch doppelreihigen Lichtleitelemente 3 sind sinnvollerweise an ihrem Ende in einer nicht dargestellten Aufnahme für eine Leiterplatte bzw. die Lichtquellen 13 zusammengeführt. Dies bewirkt zum einem eine optimale Ausrichtung der einzelnen Lichtquelle 13 auf das jeweilige Lichtleitelement 3 und führt des Weiteren zu einem einzigen Bauteil der Lichtleitelemente. Zur Herstellung eines kompakten, formstabilen Bauteiles ist es möglich die einzelnen Lichtleitelemente 3 miteinander zu verschmelzen bzw. über Verbindungsstege miteinander zu verbinden, so dass sie ein einteiliges Bauteil bilden.

## Patentansprüche

1. Leuchte für Fahrzeuge, insbesondere Signalleuchte für Kraftfahrzeuge, mit einer Mehrzahl von etwa parallel nebeneinander angeordneten langgestreckten Lichtleitelementen mit einer an einem Ende angeordneten Lichteinkoppelfläche, einer reflektierenden Fläche und einer der reflektierenden Fläche gegenüberliegenden Lichtaustrittsfläche, über die über die Lichteinkoppelfläche eingekoppeltes und von der reflektierenden Fläche reflektiertes Licht etwa quer zu einer Längsachse in einer Hauptabstrahlrichtung abgestrahlt wird, **dadurch gekennzeichnet, dass** die Lichtleitelemente (3) räumlich versetzt so angeordnet werden, dass etwa quer zur Längsachse (7) und etwa quer zur Hauptabstrahlrichtung (5) die Lichtleitelemente (3) untereinander einen so geringen Abstand (14) aufweisen, dass sie in Hauptabstrahlrichtung (5) als Fläche wirken.

2. Leuchte nach Anspruch 1, **dadurch gekennzeichnet, dass** die Lichtleitelemente (3) mindestens in Teilbereichen zweireihig hintereinander angeordnet sind, dass die Lichtleitelemente (3) einer ersten Reihe (15, 15', 15") zueinander einen eine Lücke (17) bildenden Abstand (18) aufweisen und dass die Lücke (17) jeweils von einem Lichtleitelement (3) einer zweiten Reihe (16, 16', 16") abgedeckt wird.

3. Leuchte nach Anspruch 1 oder 2, **dadurch gekennzeichnet, dass** die Lichtleitelemente (3) räumlich versetzt so angeordnet sind, dass sie sich in ihren seitlichen Abständen (14) in der Hauptabstrahlrichtung (5) überlappen.

4. Leuchte nach einem der Ansprüche 1 bis 3, **dadurch gekennzeichnet, dass** die Lichtleitelemente (3) längs einer vorgegebenen Kontur angeordnet sind.

5. Leuchte nach Anspruch 4, **dadurch gekennzeichnet, dass** die Lichtleitelemente (3) längs einer mäanderförmigen Kontur angeordnet sind.

6. Leuchte nach Anspruch 4, **dadurch gekennzeichnet, dass** die Lichtleitelemente (3) längs einer schräg verlaufenden Kontur angeordnet sind.

7. Leuchte nach einem der Ansprüche 1 bis 4, **dadurch gekennzeichnet, dass** die Lichtleitelemente (3) zur Erzeugung einer Tiefenwirkung eine konvexe Anordnung aufweisen.

8. Leuchte nach einem der Ansprüche 1 bis 4, **dadurch gekennzeichnet, dass** die Lichtleitelemente (3) zur Erzeugung einer Tiefenwirkung eine konkave Anordnung aufweisen.

9. Leuchte nach einem der Ansprüche 1 bis 8, **dadurch gekennzeichnet, dass** die Lichtleitelemente (3) mit den ihnen benachbarten Lichtleitelementen (3) verbunden sind.

10. Leuchte nach einem der Ansprüche 1 bis 9, **dadurch gekennzeichnet, dass** die Lichtleitelemente (3) an ihren Enden in einer Aufnahme zusammengefasst sind.
